# DEMANDE DE BREVET EUROPEEN

(11) **EP 2 096 002 A1**
(43) Date de publication de la demande: **02.09.2009**
(21) Numéro de dépôt: 09151842.3
(22) Date de dépôt: 02.02.2009
(51) Int. Cl.: B60R 19/12, B60R 19/26, B60R 19/34

(54) **Dispositif d'absorption de choc avec absorbeurs supérieur et inférieur reliés par un élément de liaison déformable**

(30) Priorité: 27.02.2008 FR 0851250
(71) Demandeur: Peugeot Citroën Automobiles SA, 78140 Vélizy-Villacoublay (FR)
(72) Inventeur: Jeanneau, Clément, 92100, Boulogne Billancourt (FR)
(74) Mandataire: Fernandez, Francis Lionel

(57) **Abrégé**

L'invention concerne un dispositif d'absorption de choc avec absorbeurs supérieur et inférieur reliés par un élément de liaison déformable.

Ce dispositif d'absorption est **caractérisé en ce que** l'élément de liaison (3) est déformable sous un faible choc correspondant aux normes du choc piéton.

Avantageusement, ce dispositif comprend un élément de structure pour transmettre ou limiter, dans des gammes prédéterminées de choc et de direction initiale de ce choc, les efforts générés par ce choc à l'élément de liaison (3) afin que ce dernier se déforme essentiellement selon un axe parallèle à l'axe du véhicule.

Application dans le domaine des véhicules automobiles.

## Description

La présente invention concerne un dispositif d'absorption de choc disposé à l'avant d'un véhicule automobile.

Plus particulièrement, la présente invention concerne un dispositif d'absorption de choc, comprenant un absorbeur supérieur relié à chacune de ses extrémités longitudinales à un élément d'amortissement de choc fixé par l'intermédiaire d'une platine à l'avant de la caisse d'un véhicule automobile, cette platine servant aussi de support à un élément de liaison avec une extrémité de cet élément fixée à la platine, une autre partie de l'élément étant fixée à une extrémité d'un absorbeur inférieur.

De tels dispositifs d'absorption de chocs sont connus de l'état de la technique.

Par exemple, le document FR-A-2 895 341 décrit un absorbeur supérieur et un absorbeur inférieur reliés par un élément de liaison rigide. Ce document ne décrit cependant pas un quelconque moyen de liaison permettant une liberté de mouvement entre l'absorbeur inférieur et l'absorbeur supérieur.

Le document EP-B-1 256 510 décrit une structure de véhicule automobile supportant un dispositif d'absorption de choc avec des première et seconde traverses disposées sur le devant d'un véhicule automobile. Ce document n'aborde pas la problématique du support d'un absorbeur inférieur avec un élément de liaison déformable le reliant à l'absorbeur supérieur.

Pour limiter les dommages corporels du piéton, lors d'un choc avec l'avant d'un véhicule automobile, il est nécessaire d'absorber l'énergie cinétique d'un impact léger et limité, ce qui se traduit, en général, en terme d'architecture du véhicule, par la présence d'un dispositif d'absorption inférieur présentant une rigidité relativement faible par rapport à un dispositif d'absorption supérieur, adapté en ce qui le concerne à l'absorption de chocs à plus grande vitesse contre des éléments durs et rigides.

Pour le respect de nouvelles réglementations en matière d'absorption de choc, notamment pour la protection du piéton, de nouvelles procédures d'essais ont été mises en place qui concernent en particulier le choc dit piéton et le choc dit de réparabilité. Un essai choc piéton permet d'estimer les dommages corporels d'un individu heurté par le véhicule tandis que l'essai réparabilité permet d'estimer le coût des réparations sur un véhicule testé, notamment lorsqu'il percute un obstacle rigide à une vitesse faible, par exemple inférieure à 20km/h, en général 16km/h, des essais existant aussi pour 8, 10 et 12km/h. En effet, le pare-choc est l'organe le plus souvent endommagé en cas d'impact. Sa taille, ses multiples fonctions, concernant notamment l'habillage du véhicule, l'aéraulique ainsi que ses nombreuses fixations, font que le coût d'une réparation de pare-choc n'est pas négligeable et que les réponses d'un véhicule aux essais réparabilité sont des critères pris en considération par les assureurs pour déterminer le calcul de la prime d'assurance pour un type de véhicule.

Pour répondre à l'exigence de protection piéton, il peut être envisagé de monter l'absorbeur inférieur sur chacun de ses côté longitudinaux sur un élément déformable le reliant à l'élément d'amortissement de l'absorbeur supérieur, cet élément d'amortissement étant généralement sous la forme d'une boîte d'amortissement présentant une structure ondulée ou en accordéon se tassant sous l'effet d'un choc.

Cependant, il existe un préjugé fort contre l'utilisation d'un élément de liaison déformable lors d'un choc à faible vitesse. En effet, lors d'un choc réparabilité, c'est-à-dire lors d'un choc à une vitesse inférieure à 20km/h, préférentiellement 16km/h, contre une surface dure matérialisée par un mur, l'absorbeur inférieur peut pivoter vers l'intérieur du véhicule en tordant l'élément de liaison déformable ce qui a pour conséquence d'empêcher un écrasement correct de la boîte d'amortissement, par exemple une boîte en accordéon. En conséquence, les éléments de la carrosserie du véhicule se déforment trop et ce véhicule ne respecte plus les critères de réparabilité.

Cela a pour résultat qu'aucun absorbeur inférieur n'a été monté sur un élément de liaison déformable.

Le problème à la base de la présente invention est principalement de permettre au dispositif d'absorption de choc de répondre de manière efficace aux critères du choc piéton correspondant à une force de choc faible tout en respectant les critères de choc réparabilité, correspondant à une force de choc plus élevée, notamment dans une direction non parallèle à l'axe du véhicule appliquée à la structure avant du véhicule, en empêchant que la déformation de l'élément de liaison ne fasse diminuer les capacités d'absorption de choc du dispositif.

A cet effet, l'invention a pour objet un dispositif d'absorption de choc, comprenant un absorbeur supérieur relié à chacune de ses extrémités longitudinales à un élément d'amortissement de choc fixé par l'intermédiaire d'un élément de support à l'avant de la caisse d'un véhicule automobile, cet élément de support servant aussi de support à un élément de liaison avec une première extrémité de cet élément de liaison fixée à l'élément de support, une autre partie de cet élément étant fixée à une extrémité d'un absorbeur inférieur, caractérisé en ce que l'élément de liaison est déformable sous un faible choc correspondant aux normes du choc piéton.

Selon des caractéristiques additionnelles de la présente invention :
- le dispositif comprend un élément de structure pour transmettre ou limiter, dans des gammes prédéterminées de choc et de direction initiale de ce choc, les efforts générés par ce choc à l'élément de liaison afin que ce dernier se déforme essentiellement selon un axe parallèle à l'axe du véhicule,
- chaque élément de liaison est une bretelle sous forme d'une barre déformable présentant une courbure et s'étendant sensiblement perpendiculairement aux absorbeurs supérieur et inférieur,
- l'élément de liaison est relié respectivement à l'élément de support et à l'absorbeur inférieur par des moyens amovibles de fixation,
- l'élément de structure est disposé à chaque extrémité de l'absorbeur inférieur,
- l'élément de structure est une pièce ajoutée à chaque extrémité longitudinale de l'absorbeur inférieur pour prolonger celle-ci vers l'extérieur,
- au moins une des pièces est monobloc avec l'absorbeur inférieur, cet absorbeur étant nervuré et multi-épaisseurs,
- la pièce ajoutée est sous la forme d'un bossage,
- l'élément d'amortissement présente une boîte avec une structure ondulée ou en accordéon se repliant sur elle-même pour l'amortissement du choc,
- l'absorbeur supérieur est nervuré et multi-épaisseurs en étant supporté sur sa face arrière par un côté longitudinal d'une poutre et recouvert sur sa face avant d'une peau de pare-choc, la boîte d'amortissement étant disposée de l'autre côté de cette poutre en s'étendant sensiblement perpendiculairement à cet absorbeur supérieur,
- les absorbeurs sont réalisés en matière thermoplastique ou en matériaux composites.

L'invention concerne aussi un véhicule automobile, caractérisé en ce qu'il présente sur sa partie avant un tel dispositif d'absorption.

L'effet technique obtenu est, lors d'un choc à faible force, d'avoir une déformation limitée du support d'un absorbeur inférieur par rapport à un absorbeur supérieur tout en ne dégradant pas l'efficacité de l'élément d'amortissement disposé derrière l'absorbeur supérieur qui coopère avec celui-ci pour des chocs de force plus élevée. Ceci permet, entre autres, à un élément d'amortissement de choc, présent derrière l'absorbeur supérieur, de se déformer de manière optimale.

L'invention va maintenant être décrite plus en détail mais de façon non limitative en regard des figures annexées, dans lesquelles :
- la figure 1 est une vue en perspective d'une partie d'un dispositif d'absorption avec absorbeurs supérieur et inférieur reliés par un élément de liaison,
- la figure 2 est une vue de dessus d'une partie du dispositif d'absorption selon la figure 1,
- la figure 3 est une vue de dessous d'une partie du dispositif d'absorption après un choc avec une déformation de l'élément d'amortissement,
- la figure 4 est une vue de dessous d'une partie d'un dispositif d'absorption, sans bretelle ni absorbeur inférieur, afin d'établir une comparaison avec la figure 3,
- la figure 5 est une vue en perspective d'une partie d'un absorbeur inférieur avec une pièce ajoutée formant l'élément de structure selon la présente invention,
- la figure 6 est une vue en perspective d'une partie d'un dispositif d'absorption, sans l'absorbeur supérieur, pour permettre de mieux voir la poutre de soutien de cet absorbeur supérieur et la boîte d'amortissement de cet ensemble, cette partie étant élaborée selon la présente invention,
- la figure 7 est une vue de côté du dispositif d'absorption selon la figure 1.

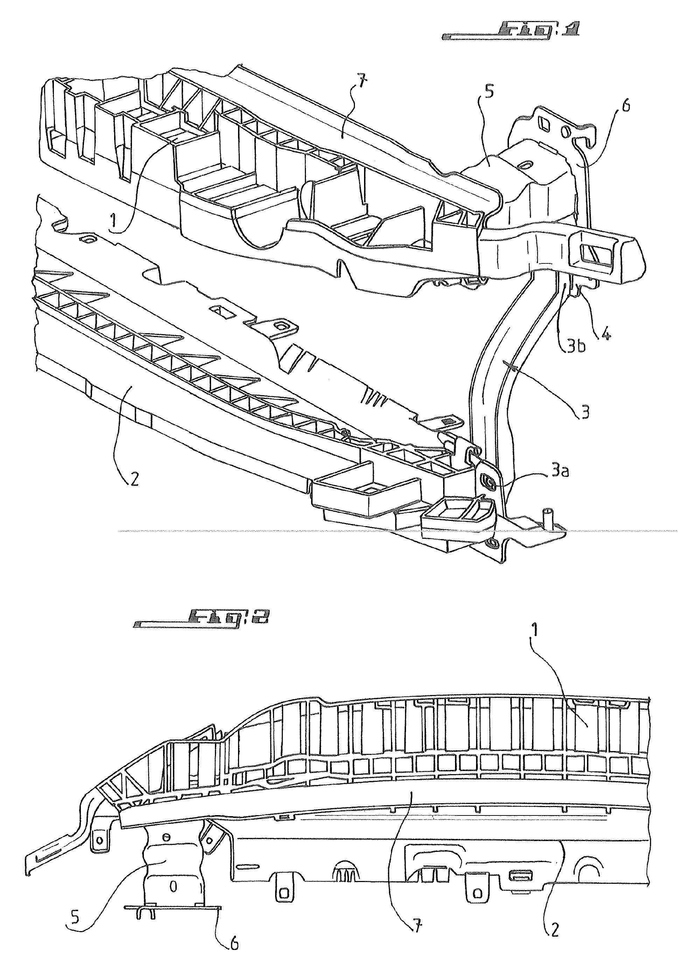

La figure 1 présente un dispositif d'absorption de choc destiné à être monté à l'avant d'un véhicule automobile. Ce dispositif d'absorption comprend des absorbeurs supérieur 1 et inférieur 2 et un élément de liaison 3 entre ces deux absorbeurs 1 et 2. Un tel dispositif d'absorption avec un élément de liaison 3 rigide est connu de l'état de la technique.

L'absorbeur supérieur 1 est supporté par une poutre 7 et est relié, par l'intermédiaire de cette poutre 7, vers chacune de ses extrémités longitudinales, à un élément d'amortissement de choc 5 fixé par l'intermédiaire d'un élément de support sous la forme d'une platine 6, à l'avant de la caisse d'un véhicule automobile.

L'élément de la caisse sur lequel est fixé chacun des éléments d'amortissement 5 de choc est en général un longeron, chacun des longerons correspondant respectivement à un des deux éléments d'amortissement 5 de choc formant un brancard, chaque élément d'amortissement protégeant la structure du brancard ainsi formé.

La platine 6 sert aussi de support à un élément de liaison 3 avec une première extrémité 3b de cet élément 3 fixée à cette platine 6, l'autre extrémité 3a étant fixée à une extrémité d'un absorbeur inférieur 2. Selon l'état de la technique, l'élément de liaison 3 est relativement rigide.

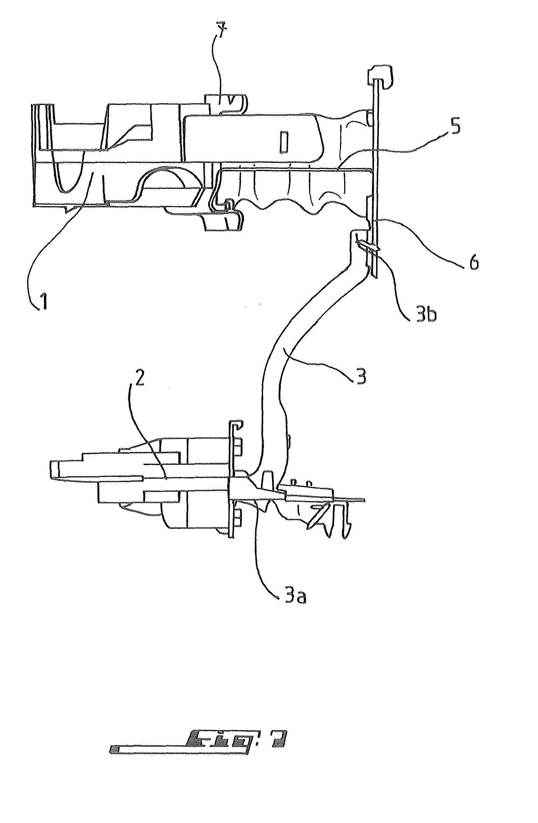

La figure 7 montre une vue de côté du dispositif d'absorption. Comme déjà mentionné pour la figure 1, l'absorbeur supérieur 1 est supporté par une poutre 7 et est relié, par l'intermédiaire de cette poutre 7, vers chacune de ses extrémités longitudinales, à un élément d'amortissement de choc 5 fixé par l'intermédiaire d'un élément de support sous la forme d'une platine 6. La platine 6 sert aussi de support à un élément de liaison 3 avec une extrémité 3b de cet élément 3 fixée à cette platine 6, une autre partie 3a de cet élément étant fixée à une extrémité d'un absorbeur inférieur 2.

Cette partie peut avantageusement être l'autre extrémité de l'élément de liaison 3. A la figure 7, l'élément de liaison 3 est sensiblement en position verticale. L'élément d'amortissement de choc 5 s'écrase lors d'un choc et il convient que cet écrasement se fasse selon son axe médian sensiblement horizontal à cette figure et parallèle à l'axe du véhicule. Cela correspond à une déformation de l'élément de liaison 3 lors d'un choc dont la principale composante est dirigée selon un axe sensiblement parallèle à l'axe du véhicule.

La figure 2 montre une vue de dessus d'un dispositif d'absorption de chocs selon l'état de la technique.

L'absorbeur supérieur 1 présente des cavités et des nervures formant des zones d'absorption d'énergie nécessaires pour l'encaissement d'un choc violent contre lui. Il en va de même pour l'absorbeur inférieur 2 avec une spécialisation contre le choc qu'il est sensé absorber, c'est à dire un choc contre la jambe d'un piéton. Cet absorbeur inférieur 2 sera donc plus déformable et moins rigide que l'absorbeur supérieur 1.

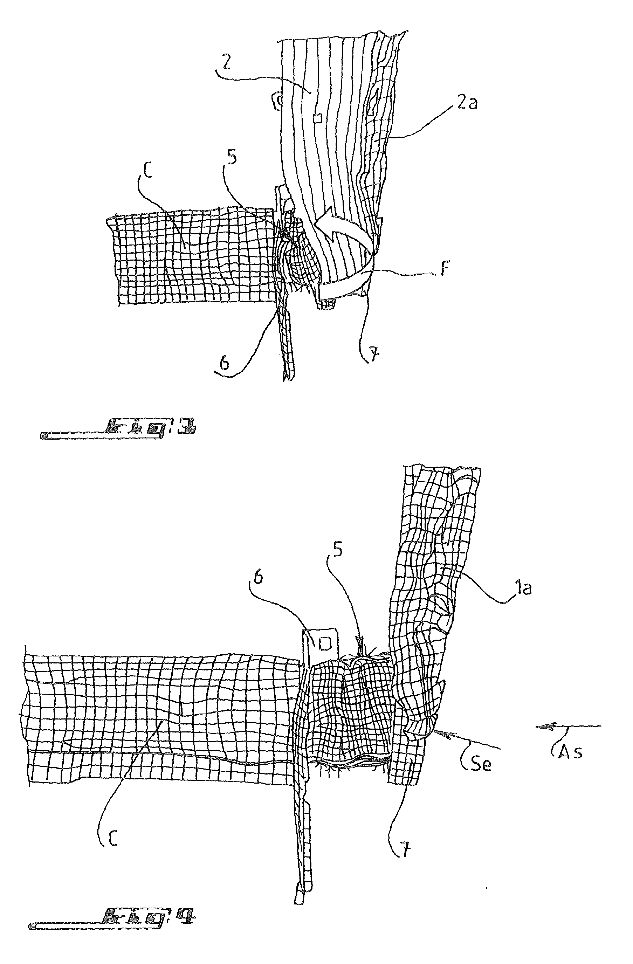

La figure 3 montre le comportement d'un des deux éléments d'amortissement 5 lors d'un choc avant du véhicule automobile, cela en particulier pour un dispositif d'absorption avec un élément de liaison 3, comme montré aux figures 1 et 2, reliant les absorbeurs supérieur et inférieur 1 et 2, cet élément de liaison 3 n'étant pas, dans le cas de la figure 3, rigide.

L'utilisation d'un tel élément de liaison peu rigide a été essayée afin d'avoir une action spécifique choc piéton réalisée par l'absorbeur inférieur. Il existe en effet un besoin fort d'avoir un dispositif d'absorption avec une telle spécialisation.

Lors d'un choc relativement violent sur le dispositif d'absorption, l'absorbeur inférieur 2, étant le moins rigide des deux absorbeurs 1 et 2, transmet la force d'impact sur cet élément de liaison 3 qui a tendance à se tordre en se tournant sur lui-même selon la flèche F sous cette force d'impact. Il s'ensuit une modification de la direction de la force d'impact et la force imprimée à l'élément d'amortissement 5, par l'intermédiaire de la poutre 7, comprend une composante oblique que cet élément 5 ne peut pas traiter correctement en s'appuyant sur la partie C de la caisse sur laquelle il est fixé par l'intermédiaire de la platine 6, par exemple le longeron respectif du véhicule automobile. L'élément d'amortissement 5 ne se compresse pas dans le sens de son axe et s'écrase alors mal en ne remplissant plus pleinement son rôle d'amortissement. Cela entraîne des dégâts sur la carrosserie du véhicule automobile et affaiblit sa réponse aux chocs dits de réparabilité comme précédemment mentionné.

Une comparaison est possible avec un dispositif d'absorption sans absorbeur inférieur et sans élément de liaison, dispositif qui est illustré à la figure 4.

A cette figure, la direction Se de la force d'impact transmise par l'absorbeur supérieur 1 et la poutre 7 présente un angle faible par rapport à l'axe souhaité As de travail de l'élément d'amortissement 5. Dans ce cas, l'élément d'amortissement 5 travaille mieux que dans le cas précédent en pouvant se replier selon ses ondulations.

Ainsi, malgré le besoin existant de fournir un absorbeur inférieur spécifiquement adapté au choc piéton, celui-ci n'a pas pu être élaboré étant donné que l'utilisation d'un élément de liaison déformable entraînait une réponse insuffisante aux chocs de réparabilité.

La présente invention propose d'utiliser un élément de liaison déformable sous une faible valeur de choc, correspondant aux normes définies pour la caractérisation du choc piéton. Ainsi, sous une faible force de choc, l'absorbeur inférieur peut reculer du fait de la déformation de l'élément de liaison et amortir le choc piéton de manière efficace.

Pour des chocs de force plus élevée, une caractéristique préférentielle de la présente invention propose une solution contre une mauvaise déformation de l'élément de liaison.

Pour un tel dispositif d'absorption avec absorbeurs supérieur et inférieur, il est proposé de les relier par un élément de liaison déformable selon un axe parallèle à l'axe du véhicule. Ce dispositif comprend par exemple un élément de structure disposé devant cet élément de liaison pour transmettre, dans des gammes prédéterminées de choc et de direction initiale de choc, les efforts générés par ce choc à l'élément de liaison essentiellement selon un axe parallèle à l'axe du véhicule afin que l'élément de liaison se déforme selon cet axe parallèle et ne se torde pas lors de sa déformation.

Par gammes prédéterminées d'efforts de choc et de direction initiale, il faut entendre des chocs ne dépassant pas une limite supérieure de force ou ne présentant pas un angle trop élevé par rapport à l'axe longitudinal, par exemple vers les 90°. En effet dans ces cas limites, les capacités de l'élément de structure ne peuvent remplir son rôle de transmission dans un plan longitudinal au véhicule de l'effort de choc. Les limites de ces gammes prédéterminées peuvent être définies par des essais d'homologation pour lesquels la direction de l'effort de choc est fixée.

Il est aussi possible de concevoir des moyens de limitation de l'action de torsion de l'élément de liaison en encadrant, par exemple, celui-ci ou en lui ajoutant des raidisseurs sur certaines parties afin qu'il puisse remplir son rôle de déformation sous un choc piéton en présentant une déformation qui satisfasse aussi aux exigences de choc réparabilité.

Dans un mode préférentiel de la présente invention, l'élément de structure est disposé à chaque extrémité de l'absorbeur inférieur.

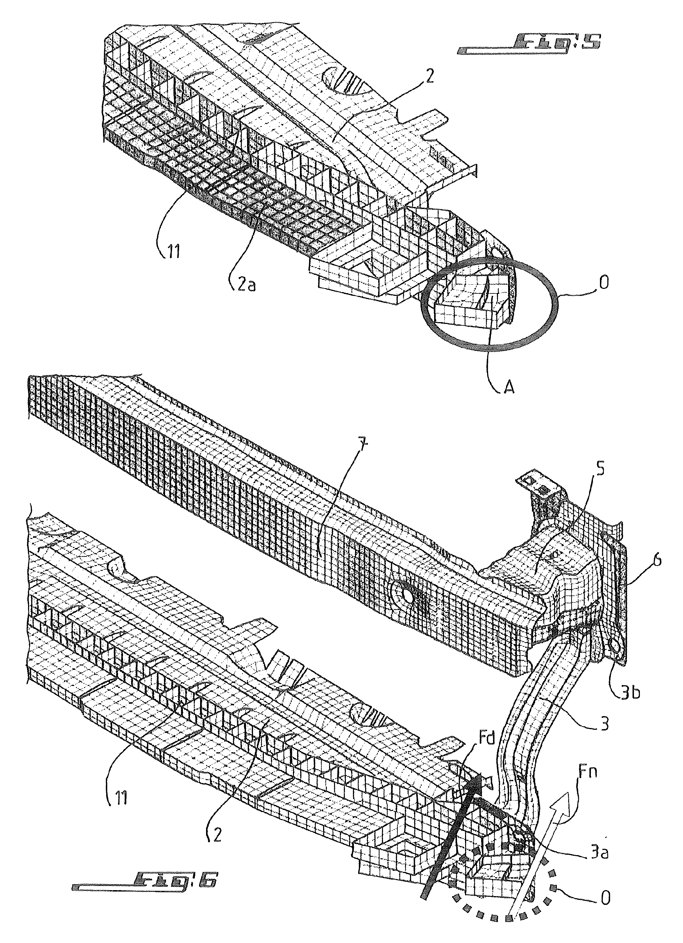

Un exemple de réalisation selon ce mode préférentiel est montré à la figure 5 de la présente demande.

Dans cet exemple de mode de réalisation, une pièce A, entourée par le cercle O, est ajoutée à chaque extrémité de l'absorbeur inférieur 2. Cette pièce A, sur la figure sous forme d'un bossage, permet de faire passer l'effort dans l'élément de liaison selon une direction parallèle à l'axe du véhicule pour un fonctionnement optimal de cet élément d'amortissement, notamment par une déformation adéquate de celui-ci.

Ceci sera mieux vu à la figure 6. Cette figure est une vue en perspective d'une partie d'un dispositif d'absorption selon la présente invention. L'absorbeur supérieur a cependant été omis de cette figure.

Les éléments d'absorption 5 sont généralement des boîtes d'amortissement dont chacune est conçue pour absorber l'énergie de chocs dirigés dans l'axe de la partie de véhicule la portant, par exemple un longeron. En cas de choc oblique ou de choc frontal, la force imprimée à la boîte d'amortissement comporte une composante oblique plus ou moins importante que la boîte ne peut pas compenser en se repliant sur la partie de véhicule la portant, c'est-à-dire en général le longeron associé.

Sans la partie ajoutée A, la force d'impact se propageait selon la flèche Fd et l'élément de liaison 3 se tordait en biais transmettant alors à l'élément d'amortissement 5 une force dans une direction défavorable à un bon fonctionnement de celui-ci.

Avec la partie ajoutée A, une partie de la force d'impact se propage selon la flèche Fn et la partie de la force d'impact propagée selon la flèche Fd diminue, ce qui est plus favorable à une déformation de l'élément de liaison 3 dans une direction parallèle à l'axe du véhicule et donc à un bon fonctionnement de cet élément d'amortissement 5.

Sur cette figure 6, des caractéristiques additionnelles du dispositif d'absorption selon l'invention, et notamment de l'absorbeur inférieur 2, sont visibles.

Chaque élément de liaison 3 peut être une bretelle sous forme d'une barre déformable présentant une courbure et s'étendant sensiblement perpendiculairement aux absorbeurs supérieur et inférieur 2, la pièce A ajoutée étant sous la forme d'un bossage.

L'élément de liaison 3 peut être relié à chacune de ses extrémités 3a et 3b respectivement à la platine 6 et à l'absorbeur inférieur 2 par des moyens amovibles de fixation pour pouvoir être démonté rapidement. Ces moyens de fixation peuvent être du type tiges filetées et écrous, vis ou analogues.

La face avant de l'absorbeur inférieur 2 peut être recouverte d'une surface 2a, comme montré à la figure 3, pour sa protection ou l'amélioration de son aspect esthétique, par exemple une peau de pare-choc. Une peau de pare-choc peut aussi être utilisée pour l'absorbeur supérieur 1.

L'absorbeur inférieur 2 peut comprendre des cavités 11 qui peuvent être sous forme de nids d'abeille pour l'absorption des forces d'impact, ces nids d'abeille étant capables de consommer de l'énergie pour se déformer en réduisant la quantité d'énergie résiduelle transmise aux points d'appui de cet absorbeur 2 qui est l'extrémité 3a de fixation de chaque élément de liaison 3.

Les deux absorbeurs supérieur et inférieur 2 peuvent être aussi multi-épaisseurs et sont de préférence en matière thermoplastique ou en matériaux composites. Il est possible de les concevoir en deux matières thermoplastiques différentes, compte tenu de leur rôle différent au niveau de l'absorption de choc.

La poutre 7 supportant l'absorbeur supérieur peut être réalisé en métal ou en matériaux composites. Cette poutre 7 peut aussi contenir une feuille intermédiaire de matériau de renfort. Cette poutre 7 est supportée sur chacune de ses extrémités longitudinales par un élément d'amortissement 5. Cet élément d'amortissement 5 peut être, de manière connue, sous la forme d'une boîte présentant une structure ondulée ou en accordéon. Comme précédemment mentionné, cette boîte assure une meilleure absorption de choc quand la force de choc est dirigée dans le sens de sa longueur.

Aux figures 5 et 6, l'élément de structure, selon la présente invention, a été montré sous la forme d'une pièce ajoutée, de préférence un bossage sur l'extrémité longitudinale de l'absorbeur inférieur. Ceci n'est qu'un mode préférentiel de la présente invention et il est possible de réaliser la présente invention avec d'autres formes d'élément de structure.

Ainsi l'élément de structure n'est pas obligatoirement fixé devant l'élément de liaison mais peut se trouver par exemple sur ses côtés pour limiter sa torsion.

L'invention n'est nullement limitée au mode de réalisation décrit et illustré qui n'a été donné qu'à titre d'exemple.

## Revendications

1. Dispositif d'absorption de choc, comprenant un absorbeur supérieur (1), relié à chacune de ses extrémités longitudinales à un élément d'amortissement (5) de choc fixé, par l'intermédiaire d'un élément de support (6), à l'avant de la caisse (C) d'un véhicule automobile, cet élément de support (6) servant aussi pour le maintien d'un élément de liaison (3) avec une première extrémité (3b) de ce dernier élément fixée à l'élément de support (6), une autre partie de cet élément (3) étant fixée à une extrémité d'un absorbeur inférieur (2),
**caractérisé en ce que** l'élément de liaison (3) est conformé pour se déformer sous un choc d'intensité correspondante à celles prévue par les normes relatives au choc piéton pour permettre alors une liberté de mouvement entre l'absorbeur inférieur et l'absorbeur supérieur et amortir ainsi le choc piéton de manière efficace.

2. Dispositif selon la revendication 1, **caractérisé en ce qu'**il comprend un élément de structure pour transmettre ou limiter, dans des gammes prédéterminées de choc et de direction initiale de ce choc non parallèle à l'axe du véhicule, les efforts générés par ce choc à l'élément de liaison (3) afin que ce dernier se déforme essentiellement selon un axe parallèle à l'axe du véhicule.

3. Dispositif selon la revendication 1 ou 2,
**caractérisé en ce que** chaque élément de liaison (3) est une bretelle sous forme d'une barre déformable présentant une courbure et s'étendant sensiblement perpendiculairement aux absorbeurs supérieur et inférieur (1 et 2).

4. Dispositif d'absorption de choc selon la revendication précédente, **caractérisé en ce que** l'élément de liaison (3) est relié respectivement à l'élément support (6) et à l'absorbeur inférieur (2) par des moyens amovibles de fixation.

5. Dispositif d'absorption de choc selon l'une quelconque des revendications précédentes, **caractérisé en ce que** l'élément de structure est disposé à chaque extrémité de l'absorbeur inférieur (2).

6. Dispositif d'absorption de choc selon la revendication 5, **caractérisé en ce que** l'élément de structure est une pièce (A) ajoutée à chaque extrémité longitudinale de l'absorbeur inférieur (2) pour prolonger ladite extrémité vers l'extérieur.

7. Dispositif d'absorption de choc selon la revendication 6, **caractérisé en ce qu'**au moins une des pièces (A) est monobloc avec l'absorbeur inférieur (2), cet absorbeur (2) étant nervuré et multi-épaisseurs.

8. Dispositif d'absorption de choc selon l'une quelconque des revendications 6 ou 7, **caractérisé en ce que** la pièce (A) ajoutée est sous la forme d'un bossage.

9. Dispositif d'absorption de choc selon l'une quelconque des revendications précédentes, **caractérisé en ce que** l'élément d'amortissement (5) présente une boîte avec une structure ondulée ou en accordéon se repliant sur elle-même pour l'amortissement du choc.

10. Dispositif d'absorption de choc selon la revendication précédente, **caractérisé en ce que** l'absorbeur supérieur (1) est nervuré et multi-épaisseurs en étant supporté sur sa face arrière par une face longitudinale d'une poutre (7) et recouvert sur sa face avant d'une peau de pare-choc, la boîte d'amortissement (5) étant disposée de l'autre côté de cette poutre (7) en s'étendant sensiblement perpendiculairement à cet absorbeur supérieur (1).

11. Dispositif d'absorption de choc selon l'une quelconque des revendications précédentes, **caractérisé en ce que** les absorbeurs sont réalisés en matière thermoplastique ou en matériaux composites.

12. Véhicule automobile, **caractérisé en ce qu'**il présente, sur sa partie avant, un dispositif d'absorption de choc selon l'une quelconque des revendications précédentes.
